# FASCICULE DE BREVET EUROPEEN

(11) **EP 3 277 560 B1**
(45) Date de publication et mention de la délivrance du brevet: **22.05.2019**
(21) Numéro de dépôt: 16720159.9
(22) Date de dépôt: 31.03.2016
(51) Int. Cl.: B60L 58/10, B62D 25/20, B60K 1/04, B62D 21/02, B62D 21/10, B62D 21/17, B62D 25/16, B62D 27/02, B62D 29/00

(54) **CHÂSSIS DE VÉHICULE LÉGER AINSI QU'UN VÉHICULE MUNI D'UN TEL CHÂSSIS**
CHASSIS FÜR LEICHTFAHRZEUG UND MIT SOLCH EINEM CHASSIS AUSGESTATTETES FAHRZEUG
CHASSIS FOR LIGHT VEHICLE, AND VEHICLE PROVIDED WITH SUCH A CHASSIS

(30) Priorité: 31.03.2015 FR 1552754
(43) Date de publication de la demande: 07.02.2018
(73) Titulaire: E4V, 72000 Le Mans (FR)
(72) Inventeur: GALLIER, Jean-Louis, 49270 Landemont (FR)
(74) Mandataire: Cabinet Morelle & Bardou SC
(86) Numéro de dépôt international: PCT/FR2016/050731
(87) Numéro de publication internationale: WO 2016/156746

(56) Documents cités:
- DE-A1-102012 020 429
- DE-A1-102013 010 332
- FR-A1- 2 977 554
- US-A1- 2011 095 574

## Description

La présente invention concerne un châssis de véhicule léger ainsi qu'un véhicule muni d'un tel châssis.

Un véhicule comporte classiquement un châssis qui sert de support à la fois pour des moyens d'entrainement (moteur + transmission et roues) et pour une carrosserie aménagée pour recevoir soit des passagers, soit des marchandises.

Le domaine de l'invention est plus particulièrement celui des véhicules à propulsion électrique même s'il n'est pas exclusivement limité à ce type de véhicule.

La masse d'un véhicule est un paramètre important dans la conception d'un véhicule. Elle détermine dans une large mesure le choix de la motorisation. Dans un véhicule électrique, la nécessité d'emporter des batteries est un handicap en termes de masse. Dans un véhicule électrique, plus on souhaite augmenter l'autonomie, plus le véhicule doit embarquer de batteries et plus il est lourd. Le véhicule est alors pénalisé en termes de performances. La problématique est différente de celle que l'on a avec un véhicule propulsé par un moteur thermique. Il est ainsi particulièrement important dans un véhicule électrique de limiter la masse de la structure pour augmenter l'autonomie du véhicule.

Le document FR-2 977 554 propose un véhicule dont le poids a été réduit. Le châssis de ce véhicule comprend :
- une structure de type nid d'abeilles formant une première plaque, la direction longitudinale des alvéoles de ladite structure de type nid d'abeilles étant perpendiculaire ou sensiblement perpendiculaire au plan de ladite première plaque de sorte que la longueur d'une alvéole définit l'épaisseur de ladite première plaque, cette dernière comportant sur son bord libre externe une échancrure par roue du véhicule, dite échancrure de roue, une roue étant disposée dans une échancrure de roue de ladite première plaque,
- une deuxième plaque, dite plaque supérieure, dont la surface correspond sensiblement à celle de la première plaque, liée rigidement à la surface supérieure de ladite première plaque,

- une troisième plaque, dite plaque inférieure, dont la surface correspond sensiblement à celle de la première plaque, liée rigidement à la surface inférieure de ladite première plaque,
- une structure résistante par échancrure de roue, dite structure de passage de roue, s'étendant en saillie au-dessus de ladite échancrure, enveloppant la partie supérieure de la roue se trouvant dans ladite échancrure de roue et définissant un passage de roue, ladite structure résistante étant rapportée et associée à ladite échancrure de roue par une liaison complète et rigide,
- une ceinture résistante externe rapportée et associée par une liaison complète et rigide sur le pourtour externe de ladite première plaque, disposée au moins partiellement entre lesdites structures résistantes de passages de roues.

Une telle structure permet d'avoir un châssis léger et qui offre également une bonne résistance mécanique.

Toutefois, la réalisation d'un tel châssis nécessite de nombreuses opérations, comme par exemple la mise en place de la ceinture résistante externe. On remarque aussi que lorsqu'une conduite, électrique ou autre, doit être acheminée au coeur ou à travers la structure en nid d'abeilles, elle doit être protégée car les bords des alvéoles du nid d'abeilles sont coupants et donc agressifs pour la conduite.

Le document US 2011/095574 A1, qui est considéré comme l'état de la technique le plus proche, montre un châssis, de préférence avec une structure en nid d'abeilles, qui présente des poutres longitudinales s'étendant de la face supérieure à la face inférieure du châssis. L'âme de ce châssis est ainsi séparée en plusieurs zones distinctes.

Le document DE 10 2012 020 429 montre quant à lui un châssis avec une structure en sandwich dans lequel il est proposé de faire passer des conduites dans un noyau en mousse.

Le document DE 10 2013 010 332 montre une structure de type sandwich avec une face supérieure et une face inférieure réalisées chacune dans un matériau composite renforcé de fibres. La structure est renforcée latéralement par des profilés longitudinaux.

La présente invention a alors pour but de fournir un autre type de châssis à la fois léger et résistant mécaniquement et plus facile à réaliser. Avantageusement, le prix de revient du châssis sera moins élevé que celui d'un châssis de l'art antérieur.

À cet effet, la présente invention propose un châssis pour véhicule comportant :
- une âme présentant une forme allongée avec une longueur supérieure à une largeur définissant une direction longitudinale,
- une plaque dite plaque supérieure dont la surface correspond sensiblement à la surface de l'âme, et
- une plaque dite plaque inférieure dont la surface correspond sensiblement à la surface de l'âme,
l'âme étant prise en sandwich entre la plaque supérieure et la plaque inférieure en étant rigidement liée à elles.

Selon la présente invention, l'âme est une âme en mousse synthétique et est renforcée par au moins un premier tube disposé longitudinalement sur une partie de la longueur de l'âme, ledit premier tube étant fixé sur une plaque du châssis en étant séparé de l'autre plaque du châssis par de la mousse synthétique.

Cette nouvelle conception de châssis permet de simplifier la réalisation d'un châssis. Tout d'abord, il est plus facile de travailler de la mousse qu'une structure en nid d'abeilles ou d'autres structures légères. Ensuite, il n'est pas nécessaire de prévoir sur tout le pourtour du dispositif de réaliser une ceinture venant fermer la structure latéralement. Le premier tube (il peut y en avoir un ou plusieurs autres) vient renforcer la structure en limitant une flexion du châssis le long de l'axe longitudinal (le plus long donc le plus soumis à la flexion) et cette direction longitudinale est avantageuse pour également permettre de guider des conduites (électriques ou autres) de l'avant vers l'arrière -ou inversement- du châssis.

La mousse utilisée pour la réalisation de l'âme est par exemple une mousse dure de polystyrène extrudée. Sa densité est par exemple comprise entre 30 et 60 kg/m³. Il s'agit par exemple d'une mousse commercialisée par la société Dow sous la marque Styrofoam et connue sous l'appellation Mousse XPS.

On prévoit de préférence que l'épaisseur de la mousse synthétique entre l'autre plaque et le premier tube correspond à au moins 25% de l'épaisseur de l'âme, et de manière encore préférée au moins 50%.

Dans un tel châssis, la plaque inférieure et la plaque supérieure sont avantageusement des plaques métalliques (pour leurs propriétés mécaniques) réalisées dans un alliage léger (pour ne pas pénaliser le poids de la structure), par exemple un alliage à base d'aluminium.

Le premier tube de renfort est par exemple réalisé dans le même matériau que la plaque sur laquelle il est fixé. Cette fixation peut être réalisée par collage, soudage, rivetage, ....

La plaque supérieure et la plaque inférieure sont avantageusement collées sur l'âme, par exemple à l'aide d'une colle de type époxy.

Pour la rigidité du châssis, il est prévu de préférence que le premier tube disposé longitudinalement soit solidaire de la plaque inférieure. Avantageusement, il est disposé dans un plan médian de l'âme. On peut aussi prévoir qu'un châssis tel que décrit ci-dessus, toujours en vue d'optimiser sa rigidité, comporte au moins un second tube disposé longitudinalement, décalé transversalement par rapport au premier tube et fixé sur l'autre plaque du châssis.

Un châssis selon l'invention comporte de préférence quatre échancrures réalisées dans les côtés longitudinaux du châssis en étant en vis-à-vis l'une de l'autre. Une structure métallique dite passage de roue peut alors être prévue au niveau de chaque échancrure en étant fixée sur la plaque supérieure et sur la plaque inférieure uniquement. L'âme en mousse est ainsi prise en sandwich par les fixations de passage de roue et travaille alors uniquement en compression, ce qui est favorable pour elle.

Dans un châssis présentant des échancrures destinées à recevoir des passages de roues, on peut prévoir qu'une première extrémité du premier tube se trouve longitudinalement au niveau de deux échancrures en vis-à-vis et que son autre extrémité se trouve au niveau des deux autres échancrures.

La plaque supérieure peut présenter une ouverture permettant d'accéder à un logement réalisé dans l'âme entre deux échancrures, et le châssis peut présenter un renfort reliant longitudinalement un bord de l'ouverture à un bord opposé. Avantageusement, ledit renfort est muni de moyens de fixation pour un moteur électrique.

On peut aussi prévoir qu'une rainure transversale relie deux échancrures et que le premier tube débouche au niveau de ladite rainure transversale. Une pièce profilée en oméga peut venir renforcer la rainure transversale et présenter avantageusement une ouverture au niveau de sa jonction avec le premier tube.

Dans une forme de réalisation préférée, le châssis tel que décrit ici est un châssis plat, c'est-à-dire que sa plaque supérieure et sa plaque inférieure sont des plaques planes.

La présente invention concerne également un véhicule comportant un châssis, des roues, un moteur, des moyens de transmission entre le moteur et les roues et une carrosserie, le châssis est un châssis tel que décrit ci-dessus.

Un tel véhicule est plus particulièrement étudié pour un moteur électrique. Ainsi, ce véhicule comporte avantageusement en outre au moins une batterie électrique, et le premier tube disposé longitudinalement reçoit des câbles d'alimentation électrique partant de la batterie au nombre d'au moins une.

Des détails et avantages de la présente invention apparaitront mieux de la description qui suit, faite en référence au dessin schématique annexé sur lequel :
La figure 1 est une vue en perspective d'un châssis selon la présente invention,
La figure 2 est une vue en perspective montrant uniquement une âme du châssis de la figure 1 avec une plaque supérieure et une plaque inférieure,
La figure 3 est une vue en perspective de pièces métalliques disposées entre la plaque supérieure et la plaque inférieure des figures précédentes,
La figure 4 est une vue en coupe transversale du châssis de la figure 1, et
La figure 5 est une vue à échelle agrandie en élévation d'un passage de roue illustré sur la figure 1.

Les figures illustrent un exemple de châssis 2 nu plus particulièrement conçu pour un véhicule électrique à quatre roues, deux roues directrices avant et deux roues motrices arrière. Il peut être utilisé pour un grand nombre de véhicules de finitions différentes, en servant par exemple de base pour des véhicules dont la carrosserie associée (non représentée) est étudiée et réalisée en fonction de la destination particulière de chaque véhicule, par exemple véhicule professionnel ou particulier, de transport en commun ou de marchandises, .... La carrosserie associée au châssis représenté est une carrosserie conventionnelle fabriquée selon tout moyen connu, par exemple en tôle, et fixée par exemple par vissage ou analogue au châssis. Cette carrosserie n'a pas été représentée car elle n'est pas l'objet de l'invention décrite. L'homme du métier est à même de réaliser selon tous moyens connus et suivant ses besoins une carrosserie, afin de l'installer et de la fixer sur le châssis 2.

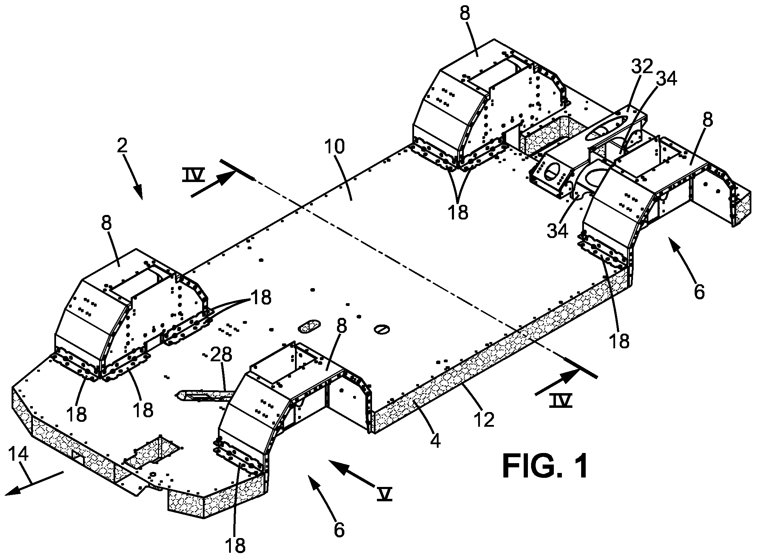

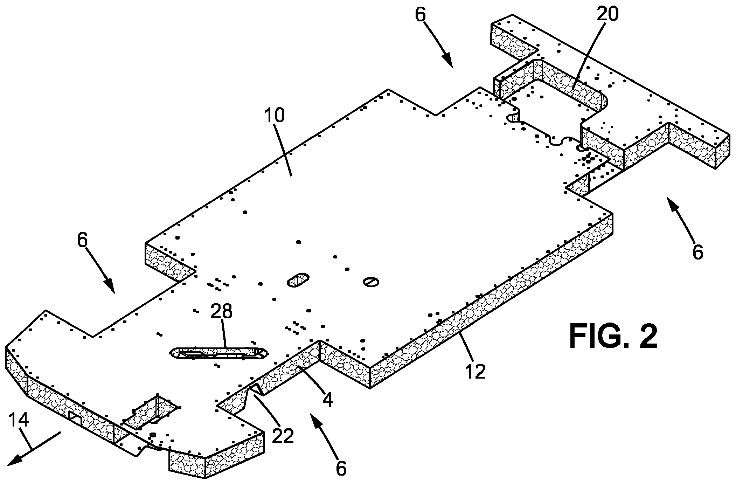

Le châssis 2 nu représenté sur les figures est plus particulièrement prévu pour un véhicule urbain électrique orienté utilitaire, transport de marchandises ou transport en commun, et comprend :
- une âme 4 en mousse synthétique comportant sur son bord libre externe une échancrure 6 par roue du véhicule (voir figure 2, roues non représentées), dite échancrure 6 de roue, une roue étant disposée dans une échancrure 6 de roue de l'âme 4 en mousse. Le châssis 2 comporte quatre échancrures 6 destinées chacune à recevoir une roue logée dans un passage de roue 8 (figure 1).
- une première plaque, dite plaque supérieure 10, dont la surface correspond sensiblement à celle de l'âme 4, liée rigidement à la surface supérieure de cette âme 2, par exemple par collage.
- une seconde plaque, dite plaque inférieure 12, dont la surface correspond sensiblement à celle de l'âme 4, liée rigidement à la surface inférieure de cette âme 4, par exemple par collage.

On a ainsi une structure composite de type sandwich. Sa forme globale est rectangulaire. Elle présente naturellement une direction longitudinale 14 qui est donnée par sa forme générale ainsi que par la forme des échancrures 6. Cette direction longitudinale 14 correspond à la direction longitudinale du véhicule (non illustré) réalisé à partir du châssis 2 et qui apparaît naturellement à l'homme du métier.

L'âme 4 est réalisée par exemple dans une mousse en polystyrène, dont la densité au mètre cube est de l'ordre de 40 kg/m³. Une telle âme convient pour un véhicule destiné à rouler jusqu'à une vitesse comprise entre 80 et 100 km/h et présentant un poids total roulant de 3,5 tonnes (3,5 10³ kg) environ. La mousse utilisée est par exemple commercialisée par la société Dow et correspond à une mousse dite XPS ou Dow RTM. Cette mousse permet d'apporter une isolation thermique et présente en outre avantageusement des qualités en termes de tenue au feu.

La plaque supérieure 10 et la plaque inférieure 12 sont ici de préférence planes et continues et réalisées en matériau métallique de type alliage léger, de préférence à base d'aluminium. On peut prévoir par exemple une épaisseur de 1,5 mm (1,5 10⁻³ m) pour la plaque inférieure 12 et une épaisseur un peu plus importante, par exemple de 2 mm, pour la plaque supérieure 10 qui est plus soumise à des impacts. L'alliage utilisé ici est par exemple un alliage d'aluminium 5754. Le collage des plaques sur l'âme est de préférence réalisé au moyen d'une colle époxy pour former une plateforme de châssis dont l'épaisseur est dans le cas d'espèce par exemple de l'ordre de 120 mm. Cette plateforme est plane. L'âme 4, la plaque supérieure 10 et la plaque inférieure 12 sont découpées selon un contour déterminé approprié selon les besoins en fonction de la forme du véhicule auquel le châssis est destiné. La plateforme reprend la forme sensiblement rectangulaire de l'âme 4, avec de préférence des angles arrondis ou chanfreinés comme représenté. Les quatre échancrures 6, disposées deux par côté longitudinal de la plateforme, sont chacune ici de forme rectangulaire et sont découpées à partir du bord libre extérieur de la plateforme pour créer un espace pour les deux roues avant et les deux roues arrière du véhicule. Les roues n'ont pas été représentées afin de montrer l'intérieur des passages de roues 8 qui se logent dans les échancrures 6 et reçoivent les roues. Chaque échancrure 6 possède des dimensions permettant de loger une roue avec son passage de roue 8 et des éléments de transmission et/ou suspension (amortisseur par exemple). Les échancrures destinées aux roues avant directrices permettent en outre le pivotement des roues. De manière avantage, les quatre échancrures 6 peuvent résulter de quatre découpes identiques dans la plateforme afin de recevoir des passages de roues 8 identiques, au moins relativement à l'interface qu'elles définissent avec la plateforme.

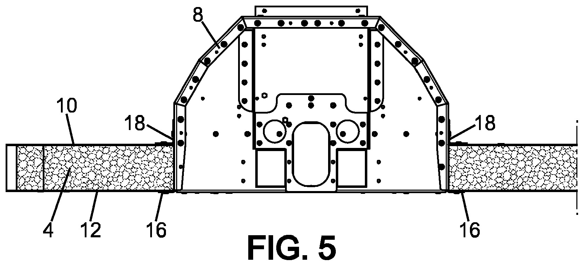

Chaque structure dite passage de roue 8 est logée dans une échancrure 6 et s'étend à partir de celle-ci en saillie au-dessus de l'échancrure 6, pour envelopper par la suite la partie supérieure de la roue se trouvant dans l'échancrure 6. Comme illustré sur la figure 5 notamment, ladite structure est rapportée et associée à l'échancrure 6 par une liaison complète et rigide. Le passage de roue 8 est formé de tôles pliées et assemblées, de préférence par boulonnage. La structure du passage de roue 8 est telle qu'elle présente un rebord inférieur 16 orienté vers la plateforme de châssis sur les trois côtés de l'échancrure 6 la délimitant par rapport à la plateforme. Le rebord inférieur 16 de chaque passage de roue 8 est vissé sur la plaque inférieure 12. Chaque passage de roue 8 est également fixé à la plateforme de châssis par des équerres 18 qui sont chacune vissée, d'une part, sur la plaque supérieure 10 et, d'autre part, sur le passage de roue 8. Ainsi, la plateforme de châssis, au niveau de chaque échancrure 6, est prise en sandwich entre les moyens de fixation du passage de roue sur la plateforme de châssis. Aucune autre fixation n'est prévue : le passage de roue 8, pour chaque roue, est ainsi uniquement fixé à la plaque supérieure 10 et à la plaque inférieure 12. Entre les équerres 18 et les rebords inférieurs 16, l'âme 4 vient au contact, ou quasiment au contact, du passage de roue 8. Aucune tôle ou autre protection n'est prévue entre l'âme 4 et le passage de roue 8.

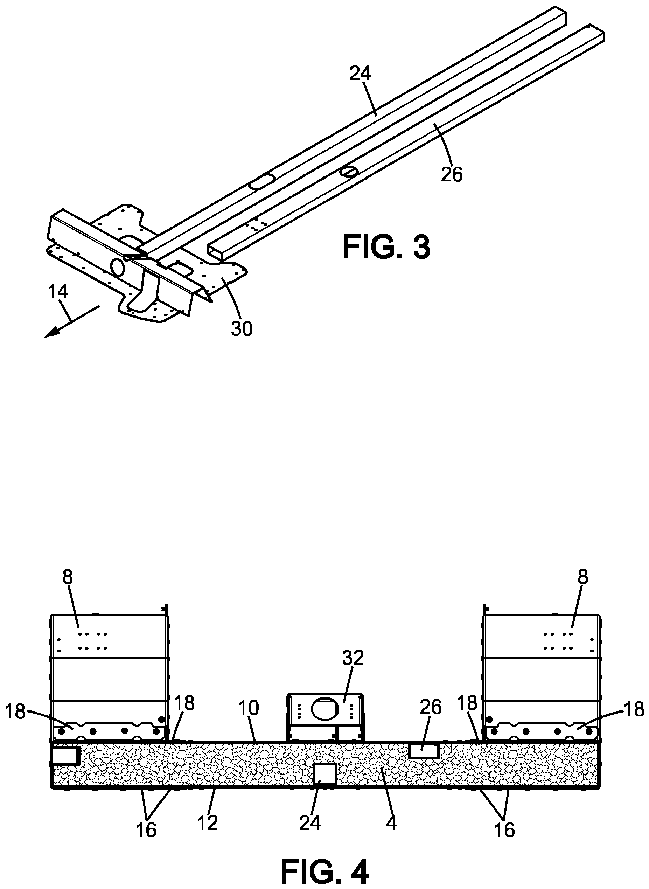

En ce qui concerne la structure de chaque passage de roue 8, mis à part les moyens de fixation à la plateforme de châssis, elle peut être similaire à la structure décrite dans le document FR-2 977 554 (figures 3 à 6 et description correspondante, notamment pages 9 à 13).

Plusieurs tronçons de tôles de rives longitudinaux et transversaux de section transversale en U, couvrent la tranche et les bords périphériques externes supérieur et inférieur de la plateforme de châssis dans les zones où des éléments de carrosserie ou des éléments mécaniques doivent être fixés. On peut par exemple prévoir une ceinture externe (non illustrée) couvrant et épousant tout le pourtour de la plateforme, de manière continue ou non, sauf sur le pourtour des échancrures 6 où se trouvent les passages de roues 8. De préférence, la section en U des tôles de rives couvre les bords de la plaque supérieure 10 et de la plaque inférieure 12 et sont fixées sur celles-ci par exemple par rivetage via les branches libres du U. La ceinture externe peut être réalisée dans de la tôle métallique pliée, par exemple en acier, dont l'épaisseur est comprise entre 1 et 3 mm. Elle peut aussi servir de renfort local pour augmenter la résistance mécanique d'ensemble du châssis par le lien qu'elle établit entre la plaque supérieure 10 et la plaque inférieure 12 de la plateforme.

On remarque sur les figures 1 et 2 notamment la présence dans la plateforme de châssis, d'une part, d'un évidement 20 débouchant vers le haut entre les deux échancrures 6 correspondant aux roues arrière et, d'autre part, d'une rainure transversale 22 entre les échancrures 6 correspondant aux roues avant du véhicule.

L'évidement 20 est réalisé par enlèvement de matière dans l'âme 4 et par découpe de la plaque supérieure 10 pour former une ouverture permettant d'introduire par le dessus, dans ledit évidement, un moteur (de préférence électrique) ainsi que des arbres s'étendant transversalement vers les passages de roue 8 (ou échancrures 6).

La rainure transversale 22 est réalisée entre les deux échancrures 6 correspondant aux roues avant du véhicule pour permettre de relier les deux roues avant et de les relier à un mécanisme de commande de type crémaillère.

De manière originale, la plateforme de châssis est renforcée par au moins une première pièce tubulaire 24 qui s'étend longitudinalement au coeur de l'âme 4. De façon préférée, la première pièce tubulaire 24 est disposée dans un plan médian de la plateforme de châssis. Elle est réalisée de préférence dans le même matériau (un alliage léger, par exemple à base d'aluminium) que la plaque supérieure 10 et/ou la plaque inférieure 12. Cette première pièce tubulaire 20 est fixée rigidement une plaque du châssis 2, à la plaque inférieure 12 dans la forme de réalisation illustrée. Elle ne s'étend en hauteur que sur une partie de l'épaisseur de l'âme 4. De préférence, elle s'étend sur moins de 75% de l'épaisseur de l'âme 4 et de manière encore préférée sur moins de 50% de cette épaisseur. Ainsi de la mousse de l'âme 4 vient prendre place entre la plaque opposée, ici la plaque supérieure 10 et la première pièce tubulaire et l'âme 4 assure de la sorte une continuité dans le sens transversal du châssis 2. À titre d'exemple numérique illustratif, si l'âme 4 présente une épaisseur de 100 mm, alors la pièce tubulaire 24 est par exemple une pièce de section carrée de 50 mmx50 mm.

Les figures 3 et 4 illustrent la première pièce tubulaire 24. La figure 3 est une vue similaire à la vue de la figure 2 mais dans laquelle l'âme 4, la plaque supérieure 10 et la plaque inférieure 12 ont été cachées.

La première pièce tubulaire 24 s'étend entre l'évidement 20 et la rainure transversale 22. Elle s'étend ainsi sur sensiblement la moitié de la longueur totale de la plateforme de châssis, entre les échancrures 6. Elle permet de renforcer ainsi toute la plateforme de châssis et limite fortement la flexion de la structure entre les roues lorsque la structure est chargée.

La première pièce tubulaire 24 est par exemple de section rectangulaire, ou plus particulièrement de section carrée comme illustré sur les figures jointes. Elle réalise un chemin pour des câbles (ou autres conduites) entre l'avant et l'arrière de la plateforme de châssis. Alors que dans la structure décrite dans le document FR-2 977 554 les câbles et conduites passent à la périphérie de la plateforme, la présence ici permet de créer une liaison directe entre l'avant et l'arrière du véhicule. Si les batteries pour alimenter le moteur électrique (non représenté) placé dans l'évidement 20 sont disposées plutôt à l'avant du véhicule, les câbles d'alimentation électrique du moteur peuvent être disposés dans la première pièce tubulaire 24. Si les batteries sont au contraire placées à l'arrière du véhicule, par exemple entre les échancrures 6 correspondant aux roues arrières, alors la première pièce tubulaire 24 permet de recevoir les câbles électriques permettant d'alimenter en courant électrique le poste de commande du véhicule, son éclairage avant, etc..

On remarque sur les figures 3 et 4 la présence d'une seconde pièce tubulaire 26 qui est également disposée longitudinalement dans la plateforme de châssis, entre les échancrures 6 pour les roues avant du véhicule et celles pour les roues arrière.

Cette seconde pièce tubulaire 26 est également réalisée de préférence dans le même matériau que la plaque supérieure 10 et/ou la plaque inférieure 12. Elle présente une section rectangulaire et est fixée rigidement à la plaque supérieure 10, en étant décalée par rapport à un plan médian de la plateforme de châssis. Cette seconde pièce tubulaire 26 présente elle aussi une hauteur limitée par rapport à l'épaisseur de l'âme 4 du châssis 2. Sa hauteur est de préférence inférieure à 75%, et de manière encore préférée 50%, de l'épaisseur de l'âme 4. Toujours à titre d'exemple numérique purement illustratif, pour la même âme 4 de 100 mm d'épaisseur, la seconde pièce tubulaire 26 est par exemple de section rectangulaire de 60 mmx40 mm, une grande face de cette seconde pièce tubulaire 26 venant alors se fixer contre la plaque supérieure 10.

On remarque sur les figures 1 et 2 la présence d'une ouverture oblongue 28 dans la plaque supérieure 10. Cette ouverture oblongue 28 permet par exemple le passage d'une tige de commande de crémaillère et de créer un accès à l'extrémité avant de la seconde pièce tubulaire 26. L'extrémité arrière de la seconde pièce tubulaire 26 débouche également dans l'évidement 20. Ainsi, la seconde pièce tubulaire 26 est légèrement plus courte que la première pièce tubulaire 24 dans la forme de réalisation illustrée (non limitative).

Lors de la conception du véhicule correspondant au châssis décrit ici, on pourra par exemple prévoir que les câbles électriques dans lesquels circule un courant fort passent dans la première pièce tubulaire 24 tandis que les câbles électriques dans lesquels circule un courant faible sont disposés dans la seconde pièce tubulaire 26 pour relier l'avant à l'arrière du véhicule.

Sur la figure 3 notamment, on remarque la présence d'une pièce métallique 30 qui rappelle une forme en Ω. Cette pièce métallique 30 est destinée à être fixée par le dessous à la plaque inférieure 12 et vient épouser la forme de la rainure transversale 22 pour permettre de loger et de fixer une crémaillère utilisée pour la commande de direction du véhicule. Cette pièce métallique 30 qui s'étend de part et d'autre de la rainure transversale 22 permet de renforcer la plateforme de châssis qui sinon serait affaiblie par la rainure transversale 22.

De même, au niveau de l'évidement 20, une pièce de renfort et de support 32 est prévue. Cette pièce forme un pont au-dessus de l'évidement 20 qui s'étend longitudinalement. Le moteur électrique est par exemple fixé sur cette pièce qui vient se fixer, par l'intermédiaire par exemple de pattes de fixation 34, sur la plateforme de châssis, notamment sur la plaque supérieure 10.

La structure proposée ici est une structure simplifiée de châssis de véhicule léger. L'utilisation de mousse pour réaliser l'âme de la plateforme de châssis permet une grande modularité et facilite grandement la conception d'un véhicule. Il est en effet facile de prévoir un logement dans la plateforme pour accueillir un élément mécanique du véhicule. Lorsqu'une conduite doit être disposée dans l'âme ou venir côtoyer l'âme de la structure, elle n'a pas besoin d'une protection spécifique, comme c'est le cas lorsqu'une conduite passe à travers une structure en nid d'abeilles.

Des pièces tubulaires (au moins une) sont utilisées pour réaliser à la fois une rigidification de la structure et un passage de conduites (électriques mais aussi éventuellement par exemple des conduites de liquide de frein, ou autre fluide).

L'utilisation d'une âme en mousse ne pénalise ainsi pas la rigidité de la structure du véhicule.

La présente invention ne se limite pas à la forme de réalisation préférée décrite ci-dessus à titre d'exemple non limitatif. Elle concerne également toutes les variantes de réalisation à la portée de l'homme du métier dans le cadre des revendications ci-après.

## Revendications

1. Châssis pour véhicule comportant :
- une âme (4) présentant une forme allongée avec une longueur supérieure à une largeur définissant une direction longitudinale,
- une plaque dite plaque supérieure (10) dont la surface correspond sensiblement à la surface de l'âme (4), et
- une plaque dite plaque inférieure (12) dont la surface correspond sensiblement à la surface de l'âme (4),
l'âme (4) étant prise en sandwich entre la plaque supérieure (10) et la plaque inférieure (12) en étant rigidement liée à elles,
l'âme (4) étant une âme en mousse synthétique et
l'âme (4) étant renforcée par au moins un premier tube (24, 26) disposé longitudinalement sur une partie de la longueur de l'âme,
**caractérisé en ce que** ledit premier tube est fixé sur une plaque (10 ou 12) du châssis en étant séparé de l'autre plaque (12 ou 10) du châssis par de la mousse synthétique.

2. Châssis selon la revendication 1, **caractérisé en ce que** l'épaisseur de la mousse synthétique entre l'autre plaque et le premier tube correspond à au moins 25% de l'épaisseur de l'âme (4).

3. Châssis selon la revendication 2, **caractérisé en ce que** l'épaisseur de la mousse synthétique entre l'autre plaque et le premier tube correspond à au moins 50% de l'épaisseur de l'âme (4).

4. Châssis selon l'une des revendications 1 à 3, **caractérisé en ce que** la plaque inférieure (10) et la plaque supérieure (12) sont des plaques métalliques réalisées dans un alliage léger, par exemple un alliage à base d'aluminium.

5. Châssis selon l'une des revendications 1 à 4, **caractérisé en ce que** le premier tube de renfort est réalisé dans le même matériau que la plaque sur laquelle il est fixé.

6. Châssis selon l'une des revendications 1 à 5, **caractérisé en ce que** la plaque supérieure (10) et la plaque inférieure (12) sont collées sur l'âme.

7. Châssis selon l'une des revendications 1 à 5, **caractérisé en ce que** le premier tube (24) disposé longitudinalement est disposé dans un plan médian de l'âme (4).

8. Châssis selon l'une des revendications 1 à 7, **caractérisé en ce qu'**il comporte au moins un second tube disposé longitudinalement, décalé transversalement par rapport au premier tube et fixé sur l'autre plaque du châssis.

9. Châssis selon l'une des revendications 1 à 8, **caractérisé en ce qu'**il comporte quatre échancrures (6) réalisées dans les côtés longitudinaux du châssis en étant en vis-à-vis l'une de l'autre.

10. Châssis selon la revendication 9, **caractérisé en ce qu'**une structure métallique dite passage de roue (8) est fixée au niveau de chaque échancrure (6) sur la plaque supérieure (10) et sur la plaque inférieure (12) uniquement.

11. Châssis selon l'une des revendications 9 ou 10, **caractérisé en ce qu'**une première extrémité du premier tube se trouve longitudinalement au niveau de deux échancrures (6) en vis-à-vis et **en ce que** son autre extrémité se trouve au niveau des deux autres échancrures (6).

12. Châssis selon l'une des revendications 9 à 11, **caractérisé en ce que** la plaque supérieure (10) présente une ouverture permettant d'accéder à un logement (20) réalisé dans l'âme entre deux échancrures (6), et **en ce que** le premier tube débouche au niveau dudit logement (20).

13. Châssis selon la revendication 12, **caractérisé en ce qu'**il présente un renfort (32) reliant longitudinalement un bord du logement à un bord opposé.

14. Châssis selon l'une des revendications 9 à 13, **caractérisé en ce qu'**une rainure transversale (22) relie deux échancrures (6), et **en ce que** le premier tube (24) débouche au niveau de ladite rainure transversale (22).

15. Châssis selon la revendication 14, **caractérisé en ce qu'**une pièce profilée en oméga (30) renforce la rainure transversale (22) et présente une ouverture au niveau de sa jonction avec le premier tube (24).

16. Châssis selon l'une des revendications 1 à 15, **caractérisé en ce qu'**il s'agit d'un châssis plat, c'est-à-dire que la plaque supérieure (10) et la plaque inférieure (12) sont des plaques planes.

17. Véhicule comportant un châssis, des roues, un moteur, des moyens de transmission entre le moteur et les roues et une carrosserie, **caractérisé en ce que** le châssis est un châssis selon l'une des revendications 1 à 16.

18. Véhicule selon la revendication 17, **caractérisé en ce que** le moteur est un moteur électrique.

19. Véhicule selon l'une des revendications 17 ou 18, **caractérisé en ce qu'**il comporte en outre au moins une batterie électrique, et **en ce que** le premier tube (24, 26) disposé longitudinalement reçoit des câbles d'alimentation électrique partant de la batterie au nombre d'au moins une.

## Patentansprüche

1. Fahrgestell für ein Fahrzeug, umfassend:
- einen Kern (4), der eine langgestreckte Form mit einer Länge aufweist, die größer als eine Breite ist und eine Längsrichtung definiert,
- eine Platte, genannt obere Platte (10), deren Fläche im Wesentlichen der Fläche des Kerns (4) entspricht, und
- eine Platte, genannt untere Platte (12), deren Fläche im Wesentlichen der Fläche des Kerns (4) entspricht,
wobei der Kern (4) sandwichartig zwischen der oberen Platte (10) und der unteren Platte (12) angeordnet ist, wobei er starr mit ihnen verbunden ist,
wobei der Kern (4) ein Kern aus synthetischem Schaumstoff ist und der Kern (4) durch wenigstens ein erstes Rohr (24, 26) verstärkt ist, das längs über einen Teil der Länge des Kerns angeordnet ist,
**dadurch gekennzeichnet, dass** das erste Rohr an einer Platte (10 oder 12) des Fahrgestells befestigt ist, wobei es von der anderen Platte (12 oder 10) des Fahrgestells durch synthetischen Schaumstoff getrennt ist.

2. Fahrgestell nach Anspruch 1, **dadurch gekennzeichnet, dass** die Dicke des synthetischen Schaumstoffs zwischen der anderen Platte und dem ersten Rohr wenigstens 25 % der Dicke des Kerns (4) entspricht.

3. Fahrgestell nach Anspruch 2, **dadurch gekennzeichnet, dass** die Dicke des synthetischen Schaumstoffs zwischen der anderen Platte und dem ersten Rohr wenigstens 50 % der Dicke des Kerns (4) entspricht.

4. Fahrgestell nach einem der Ansprüche 1 bis 3, **dadurch gekennzeichnet, dass** die untere Platte (10) und die obere Platte (12) Metallplatten sind, die aus einer Leichtmetalllegierung hergestellt sind, zum Beispiel einer Legierung auf Aluminiumbasis.

5. Fahrgestell nach einem der Ansprüche 1 bis 4, **dadurch gekennzeichnet, dass** das erste Verstärkungsrohr aus dem gleichen Material wie die Platte hergestellt ist, an der es befestigt ist.

6. Fahrgestell nach einem der Ansprüche 1 bis 5, **dadurch gekennzeichnet, dass** die obere Platte (10) und die untere Platte (12) an den Kern geklebt sind.

7. Fahrgestell nach einem der Ansprüche 1 bis 5, **dadurch gekennzeichnet, dass** das längs angeordnete erste Rohr (24) in einer Mittelebene des Kerns (4) angeordnet ist.

8. Fahrgestell nach einem der Ansprüche 1 bis 7, **dadurch gekennzeichnet, dass** es wenigstens ein längs angeordnetes zweites Rohr umfasst, das in Bezug auf das erste Rohr in Querrichtung versetzt ist und an der anderen Platte des Fahrgestells befestigt ist.

9. Fahrgestell nach einem der Ansprüche 1 bis 8, **dadurch gekennzeichnet, dass** es vier Aussparungen (6) umfasst, die in den Längsseiten des Fahrgestells gebildet sind, wobei sie einander gegenüberliegen.

10. Fahrgestell nach Anspruch 9, **dadurch gekennzeichnet, dass** eine Metallstruktur, genannt Radkasten (8), im Bereich jeder Aussparung (6) nur an der oberen Platte (10) und an der unteren Platte (12) befestigt ist.

11. Fahrgestell nach einem der Ansprüche 9 oder 10, **dadurch gekennzeichnet, dass** sich ein erstes Ende des ersten Rohrs in Längsrichtung im Bereich von zwei gegenüberliegenden Aussparungen (6) befindet und dass sich sein anderes Ende im Bereich der zwei anderen Aussparungen (6) befindet.

12. Fahrgestell nach einem der Ansprüche 9 bis 11, **dadurch gekennzeichnet, dass** die obere Platte (10) eine Öffnung aufweist, die den Zugang zu einer Aufnahme (20) erlaubt, die in dem Kern zwischen zwei Aussparungen (6) gebildet ist, und dass das erste Rohr im Bereich der Aufnahme (20) mündet.

13. Fahrgestell nach Anspruch 12, **dadurch gekennzeichnet, dass** es eine Verstärkung (32) aufweist, die in Längsrichtung einen Rand der Aufnahme mit einem entgegengesetzten Rand verbindet.

14. Fahrgestell nach einem der Ansprüche 9 bis 13, **dadurch gekennzeichnet, dass** eine Quernut (22) zwei Aussparungen (6) miteinander verbindet und dass das erste Rohr (24) im Bereich der Quernut (22) mündet.

15. Fahrgestell nach Anspruch 14, **dadurch gekennzeichnet, dass** ein omegaförmiges Profilteil (30) die Quernut (22) verstärkt und eine Öffnung im Bereich seiner Verbindung mit dem ersten Rohr (24) aufweist.

16. Fahrgestell nach einem der Ansprüche 1 bis 15, **dadurch gekennzeichnet, dass** es sich um ein flaches Fahrgestell handelt, d.h. dass die obere Platte (10) und die untere Platte (12) ebene Platten sind.

17. Fahrzeug, umfassend ein Fahrgestell, Räder, einen Motor, Übertragungsmittel zwischen dem Motor und den Rädern und eine Karosserie, **dadurch gekennzeichnet, dass** das Fahrgestell ein Fahrgestell nach einem der Ansprüche 1 bis 16 ist.

18. Fahrzeug nach Anspruch 17, **dadurch gekennzeichnet, dass** der Motor ein Elektromotor ist.

19. Fahrzeug nach einem der Ansprüche 17 oder 18, **dadurch gekennzeichnet, dass** es ferner wenigstens eine elektrische Batterie umfasst und dass das längs angeordnete erste Rohr (24, 26) Stromversorgungskabel aufnimmt, die von der wenigstens einen Batterie ausgehen.

## Claims

1. Chassis for a vehicle, comprising:
- a core (4) having an elongate shape with a length, greater than a width, defining a longitudinal direction,
- a plate referred to as the upper plate (10), of which the surface substantially corresponds to the surface of the core (4), and
- a plate referred to as the lower plate (12), of which the surface substantially corresponds to the surface of the core (4),
the core (4) being sandwiched between the upper plate (10) and the lower plate (12) while being rigidly connected thereto,
the core (4) being a core of synthetic foam and the core (4) being reinforced by at least one first tube (24, 26) arranged longitudinally over a portion of the length of the core,
**characterized in that** said first tube is fixed to a plate (10 or 12) of the chassis and is separated from the other plate (12 or 10) of the chassis by synthetic foam.

2. Chassis according to claim 1, wherein the thickness of the synthetic foam between the other plate and the first tube corresponds to at least 25% of the thickness of the core (4).

3. Chassis according to claim 2, wherein the thickness of the synthetic foam between the other plate and the first tube corresponds to at least 50% of the thickness of the core (4).

4. Chassis according to one of claims 1 to 3, wherein the lower plate (10) and upper plate (12) are metal plates made of a light alloy, for example an aluminum-based alloy.

5. Chassis according to one of claims 1 to 4, wherein the first reinforcing tube is made of the same material as the plate to which it is attached.

6. Chassis according to one of claims 1 to 5, wherein the upper plate (10) and lower plate (12) are bonded to the core.

7. Chassis according to one of claims 1 to 5, wherein the longitudinally arranged first tube (24) is arranged in a midplane of the core (4).

8. Chassis according to one of claims 1 to 7, wherein it comprises at least one longitudinally arranged second tube, offset transversely relative to the first tube and fixed to the other plate of the chassis.

9. Chassis according to one of claims 1 to 8, wherein it comprises four recesses (6) created in the longitudinal sides of the chassis and opposite one another.

10. Chassis according to claim 9, wherein a metal structure referred to as a wheel well (8) is fixed at each recess (6) to the upper plate (10) and to the lower plate (12) only.

11. Chassis according to one of claims 9 or 10, wherein a first end of the first tube is longitudinally positioned at two opposing recesses (6) and its other end is positioned at the two other recesses (6).

12. Chassis according to one of claims 9 to 11, wherein the upper plate (10) has an opening allowing access to a housing (20) created in the core between two recesses (6), and wherein the first tube opens onto said housing (20).

13. Chassis according to claim 12, wherein it has a reinforcement (32) longitudinally connecting one edge of the housing to an opposite edge.

14. Chassis according to one of claims 9 to 13, wherein a transverse groove (22) connects two recesses (6), and wherein the first tube (24) opens onto said transverse groove (22).

15. Chassis according to claim 14, wherein a part with an omega profile portion (30) reinforces the transverse groove (22) and has an opening at its junction with the first tube (24).

16. Chassis according to one of claims 1 to 15, wherein it is a flat chassis, meaning that the upper plate (10) and the lower plate (12) are planar plates.

17. Vehicle comprising a chassis, wheels, a motor or engine, means of transmission between the motor or engine and the wheels, and a body, **characterized in that** the chassis is a chassis according to one of claims 1 to 16.

18. Vehicle according to claim 17, wherein the motor or engine is a motor.

19. Vehicle according to claim 17 or 18, further comprising at least one electric battery, and wherein the longitudinally arranged first tube (24, 26) receives power cables extending from the at least one battery.
